# EUROPEAN PATENT APPLICATION

(11) **EP 1 987 749 A2**
(43) Date of publication of application: **05.11.2008**
(21) Application number: 08157995.5
(22) Date of filing: 16.11.2005
(51) Int. Cl.: A47J 31/40, B65D 81/00, A47J 31/44

(54) **Coffee machine and method for producing a hot drink**

(30) Priority: 18.11.2004 EP 04027386
(62) Divisional of application: 05024043.1
(71) Applicant: Press Unique B.V., 3512 NK Utrecht (NL)
(72) Inventor: EvgiI, Ram, 61130, Tel-Aviv (IL)
(74) Representative: Eisenführ, Speiser & Partner

(57) **Abstract**

The inventions refers to a device for heating and/or frothing milk, comprising a steam valve (96) for guiding steam to heat the milk a milk container (80), especially a pitcher, for containing milk and a steam nozzle (92) for providing steam, whereby the milk container comprises a steam adapter (82), especially in its bottom, for operatively connecting the milk container (80) to the steam nozzle (92).

## Description

Invention related to a coffee machine and/or a method for producing a hot drink on the basis of coffee or tea. Lots of coffee machines and methods for producing coffee or tea are well known in the state-of-the-art, unfortunately the quality of those hot drinks is not all the time as desired and required from the customers.

Sometimes also the usage and operability is not well engineered, such as that the individual consumer is unable to make its own coffee or tea drink in a simple and inexpensive way and even the best coffee machine is unable to make an excellent coffee or tea, if the water used for the hot drink is suboptimal such that the taste of the hot drink is not that what is desired by the consumer, and the taste is also negatively influenced by the effects of the physical contacts between the ingredients and the producing elements.

Some operations in preparing hot drinks like espresso or cappuccino are well known but still difficult to perform in the desired way. For example, in all traditional espresso machines, that use the traditional "porta filters", according to the rules of preparing the espresso, the dose of the fresh grounded coffee, that is being charged on the filter is needed to be packed and tamped, before engaging the "porta filter" to the machine espresso brewing group. Most espresso professional grinders featured a fixed or telescopic tamper. Professional "barista" are usually tamping with their hand operated preferably tamper. The tamping is traditionally done by applying hand force towards the coffee packed in the filter.

The amount of force the "barista" is applying on the coffee has a major effect on the quality of the espresso brewed. For most espresso professional grinders the amount of force depends mainly on the user operating the machine and thus the constant, necessary pressure is hard to obtain, resulting in loss of the quality of the espresso brewed.

Additionally, many hot drinks like coffee drinks, especially cappuccino, depends on the quality of the milk froth. Espresso machines are mostly equipped with at least one steam wand, operated by a mechanical or electrical valve, for frothing milk. It is important for the taste of the hot drink to be prepared, to heat the milk using the steam but it is also important to avoid overheating of the milk. As known in the state of the art, the temperature and thus the quality of the milk froth depends mainly on the experience of the person operating the steam wand, e.g. the "barista". Some "barista" use a dial thermometer inside the milk pitcher for having an idea about the milk temperature. But still, it is difficult to obtain a constant quality of the milk froth.

Thus, the object of the invention is to improve coffee machines in general and the method for producing coffee or tea hot drinks such that the user at all times has a product which has an extremely high quality.

It is also desirable, to provide the same pressure for tamping all the time in the same given coffee grinding stage, to obtain the perfect and the ultimate extracting time and efficiency, as far as possible.

Single or double dose of tea, coffee, Espresso coffee, herbal infusion or any other form of hot drink, packed together with the water at the exact amount and quality controlled to meet the highest standard ready to be freshly brewed in the special brewing device according to this invention. This device heats the water to the optimal temperature and presses the water through the product to infuse and/or extract it to the cup, whereby also the pressure is within an optimal value range.

The hot drink product on the basis of tea or coffee or chocolate can come in several variations, such as "coffee or tea to go", a disposable paper or plastic cup, packed together with the product and sugar, milk, etc. This variation can be used in dry-brewing machines situated in public areas.

Similar, a non-disposable system is designed with a refillable and removable container for both water and the substance/extract (coffee, tea for example) that retains the unique brewing method where the machine core and heating element remain dry all the time, free from contact with any ingredient, such that the taste of one ingredient cannot influence the taste of another product (ingredient).

According to the invention a disposable insert container contains the exact amount of water in the exactly required quality required for the infusion. Non-disposable and disposable insert containers are to be heated from the outside to be used in a dry-brewing machine for hot drinks.

The dry-brewing machines such as an Espresso making machine that is in configuration shall be dry, free from contact with any of the ingredients. The water is provided in the disposable insert container and separated from the substance/extract. The water shall be heated and pressed onto the cup from the outside indirectly and the insert container walls separate both water and the substance from being in contact with the heating and pressure system, infusion chamber and dispersion mash are in the one time use insert.

Thus, the insert container wall can be made from a suitable food-safe material, such as plastics, polymers, metals, etc., whereby no negative influence to the taste is given.

The disposable insert container is supplied in a sealed state. The container is automatically opened, the aperture letting the water flow into the infusion chamber created by the dry-brewing machine. In case of a non-disposable container, the aperture is created using an actual valve.

Thus, it is also possible that the disposable/non-disposable water container is inserted into the dry-brewing machine, then heated from the outside, creating a steam source.

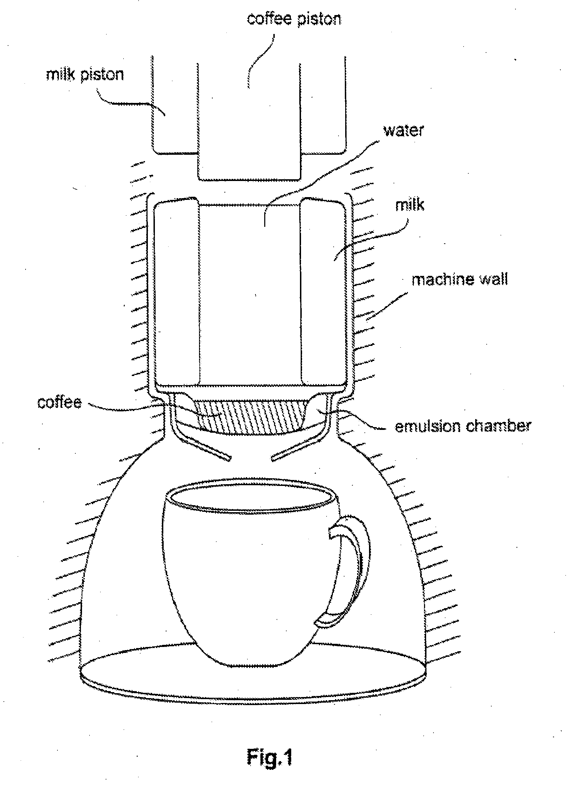

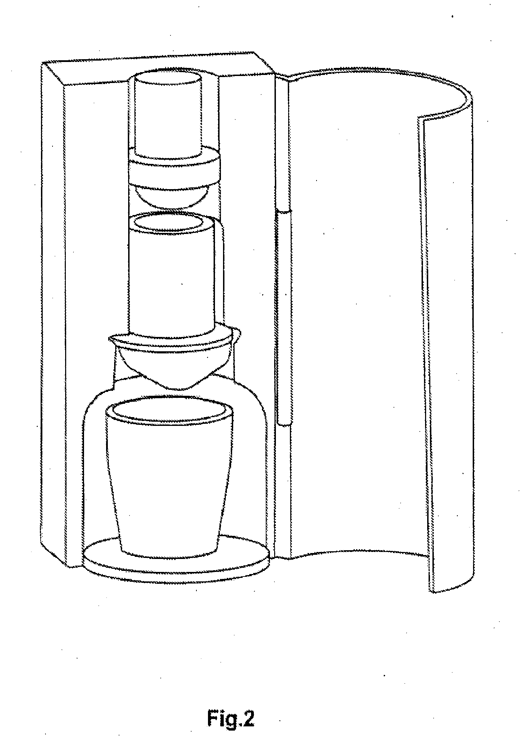

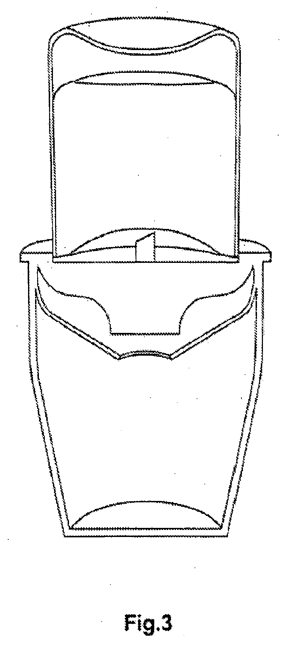

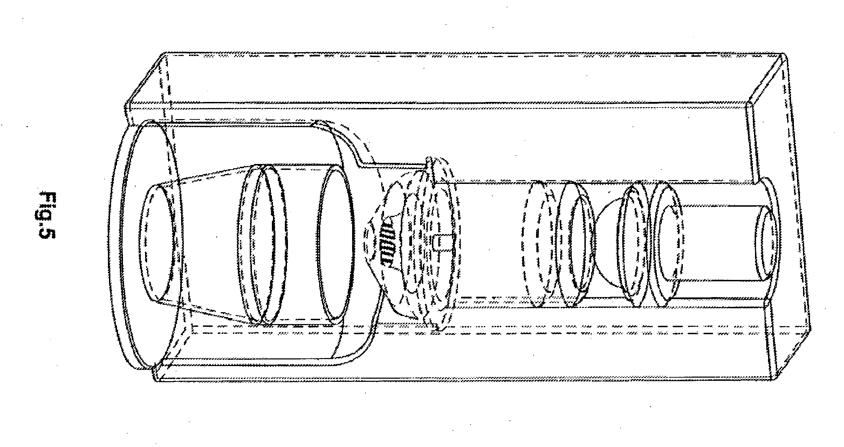

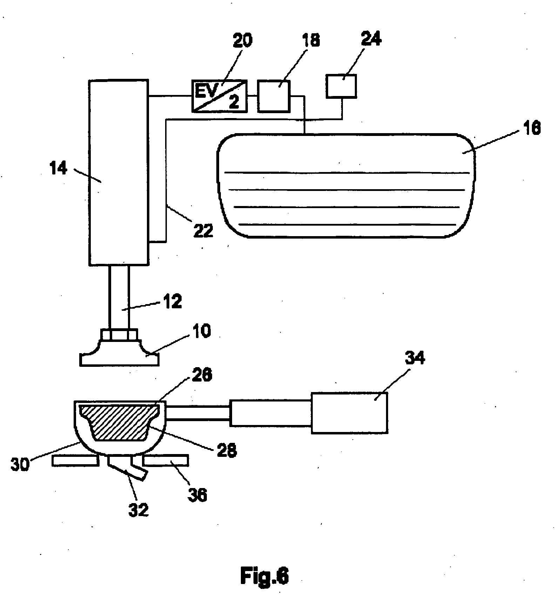

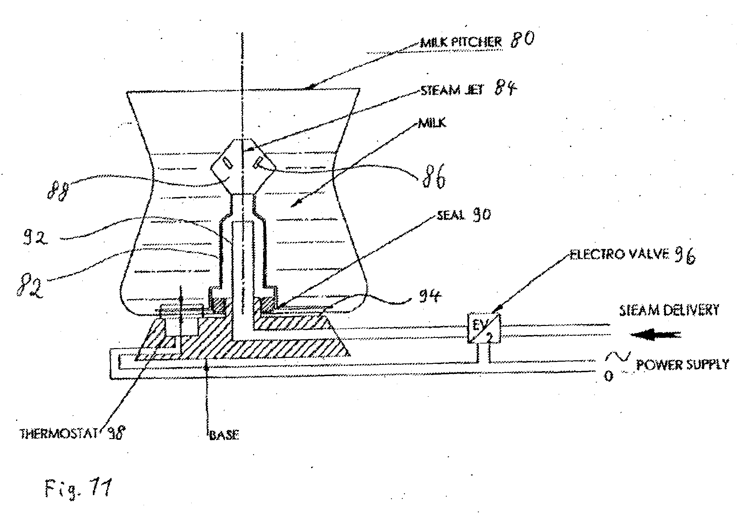

The figures 1-11 attached to the application are showing the concepts and lots of details of the invention and these figures referred to here and below will be discussed later on. Thus, the concept of the invention in the first place is not to have only a package with the ingredient, whereby the package contains the exact amount of ingredient, but also to have another container with water or fluid containing the exact amount of water to be needed for the hot drink product and this package water can be heated and then pressed to the ingredients, such that the final product has the same quality all over the world, independently where the product is made, because the package contains the water as desired by the user or manufacturer. If, for example, the water container contains water from a specific source in Italy, it is possible with the invention to create a genuine Italian Espresso made by Italian water and Italian Espresso ingredient, whereby the water is totally fresh after having been put into the closed container and will be fresh for a very long time.

Thus, the basic concept of the invention is that there is never a physical contact between the water (or fluid) on the one side and the ingredient on the other side before both elements have to be brought together, and on the other side there is also no physical contact of the water and the ingredient with the mechanical parts of the machine, such that at all times we have a consistent quality since the water is of constant quality and defined quantity and thus, the product everywhere in the world has the consistently the same and the identical parameters regarding temperature, quantity, taste, etc., as defined by the manufacturer/supplier of the device or product.

There is some prior art, which can be identified with the following numbers: DE 37 35 352 A1, DE 100 07 254 A1, DE 196 09 428 A1, DE 74 30 109 U1, DE 89 09 315 U1, EP 057 671 A2, EP 344 541 A1, EP 468 080 B1, EP 521 187 B1, EP 521 188 B1 (as DE 691 14 278 T2), EP 784 955 B1 (as DE 696 02 713 T2), US 4 382 402 A, US 4 846 052 A, US 5 327 815 A, WO 1995 / 07041 A1.

Not even one of these documents and not the combination of all of them is fulfilling a product quality as suggested with the invention described herein. The European patent application EP 0344541 is addressing a coffee-making issue from a Mocha pot point of view. Low pressure, caused by high temperature water being the only source for energy force for pushing, and infusion, basically creates a coffee Mocha. Thus, this product lacks many of the properties unique to Espresso, method based drinks and therefore, this application EP 0344541 cannot be compared with the inventional concept of the present application.

The aim of the invention is to produce a product presenting the same renowned cream (crema), full-bodied and mild taste in cup for which the Italian Espresso is appreciated for, without burning the oils (making the coffee taste sharp and bitter without cream (crema)).

In EP 0344541 the temperature point is dedicated by the need to push the container content through the substance, instead of being considered for the best temperature-point for the optimum infusion from the substance. The hot temperature in this citation combined with low pressure infusion results in poor product with burned oil and over-extraction (see Mocha) pot compared to pump operated Espresso machines). Also, there cannot be any creamer using the disposable Mocha pot in EP 0344541.

The invention of this application suggests, in addition to what is described here before, heating the water to the optimum temperature unique for every chosen substance, for example 88°C in case of Espresso coffee production. Attempting in EP 0344541 to make proper Espresso coffee requires pushing an infusion pressure of between 0,8 - 1,5 bar and this can only be reached by heating the water to 100°C -115°C. The result is insufficient and the taste is worse.

Thus, one of the concepts of the invention here is also to remove completely the co-dependence of pressure and temperature. In addition to the package of the water container, the infusion is caused by mechanical stress, not vapor. A compatible Espresso machine, piston type, using micro-wave or any other kind of heat energy source will produce coffee by disposable cartridges. Temperature, piston moving and pressure shall be all regulated by the machine.

In the proposed machine, a controlled temperature heating point can be optimised for coffee, tea and any other.

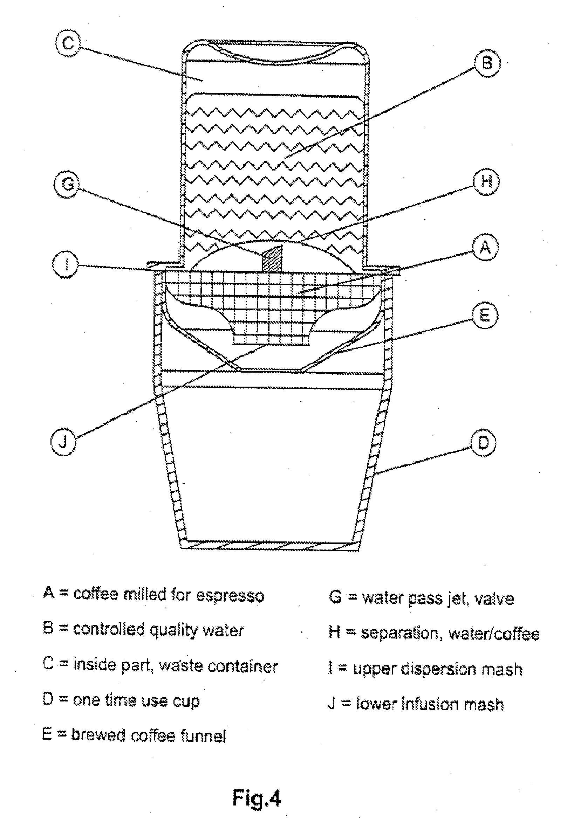

A dual piston system - see figure 4 - is enabling a timed and progressive infusion/emulsion of a substance with two distinct liquids to create milk-based drinks (Cappuccino, milk-based tea etc.), thus heating water to desired temperature, extracting coffee by water using one piston, steaming milk and emulsifying it with hot steam (creating frothed milk), pressing the milk into the cup using the second piston.

Thus, the inventional machine can also be used for soluble milk replacement substance manufacturers for babies, i.e. those who require heating to a low predetermined temperature (for example 35°C). A disposable milk-replacement drink containing the exact required mixtures could be made available using the invention.

The invention concept is overcoming lots of servicing problems, a poor reliability and poor performance and results in the cup, caused by the contact of the ingredients with the machine, which create lime scale residue, burnt oil residues and taste, independent of the available water quality.

According to the inventional concept for an Espresso coffee the temperature should be below 95°C all the time, preferably in the range of 86 to 90°C, in particular 88°C for a real Espresso.

The recommended pressure for the inventional coffee machine is approximately 9 bar as built up by a pump. The exact pressure is less critical and will be tailored to the desired consistently applied specification of the manufacturer/supplier.

The aforementioned application describes a coffee Espresso process, whereby this does not mean that the inventional machine is only able to produce a typical Espresso. A coffee Espresso process means that the fluid, which is brought into contact with the ingredient like coffee powder or Espresso powder, is pressed on the defined pressure, for example 9 bar and with the predefined temperature like e. g. 88°C during a certain time, for example 22 seconds (for 35 centilitre) through the ingredient, which has the predefined amount (for example 7 gram for 35 centilitre Espresso).

Thus, the inventional machine is able to lead through the defined amount of fluid with the defined pressure and a defined temperature with the defined time and this altogether is done without direct contact of the fluid and/or the ingredient with the machine itself, for example with a part of the housing of the machine itself, because the fluid as well as the ingredient is contained in different containers, which are brought in contact with each other during the erogation process only.

By encapsulation of the fluid in a container it is also possible to produce a real original Italian Espresso by encapsulating original Italian water in the one container and by encapsulating a real Italian Espresso ingredient in the other container, such that with the invention it is possible for the first time to produce individually a real original drinkable food like an original Italian Espresso worldwide and due to the fact, that neither the fluid nor the ingredient is ever in direct contact with the machine itself, the invention also provides a top level of quality of the drinkable food.

The inventive system may be free of service and period cleaning means and thus, it is possible with the inventive system to obtain a consistent top quality beverage that is totally free of any undesired taste. To create a machine that is capable of brewing several different types of hot drinks, one after another, without leaving any taste or odour to the brewing device, the inventive system can be obtained only by dividing the machine in two groups.

One group of the machine is the insert of an accommodation house for the insert, heating source, pressure source, operation control and electronic control and thus, it is more the hardware of the machine.

The second group is the water/liquid container, valve, dispersion mash, infusion/extraction chamber, funnel for guiding the final product to the serving cup. This refers to the other part/group of machine uniquely combined and packed with a brewing liquid/brewing substance, this refers to the insert.

The inventive machine is holding the insert, sourcing the heat and pressure to brew it with the desired parameters, and this is done from the outside to the insert. All other parts and components that are required for perfect infusion/extraction, such as dispersion mash, valve, infusion chamber, funnel are one-time-use, as part of the insert.

Summarizing, the inventive machine is able to produce hot drinks, coffee and herbal infusion and such alike by using a disposal insert, whereby the machine remains free of direct contact with any of the ingredients, like water, coffee, or such alike. The inventive machine is featuring the heating source, to heat the water or substance from the outside of the insert. The inventive machine is featuring the pressure source, to press water or liquid for infusion/extraction with the desired parameters like pressure, temperature etc. from the outside of the insert.

The inventive machine is featuring a chamber to accommodate the insert, the machine is free of any contact with any of the ingredient, such as water, liquid, substance etc. Direct contact is only given with disposable insert, refillable insert.

The disposable insert, to accommodate the ingredients, is to be used in the machine. The insert in containing the right and optimal quantity and quality of water, milk, and such alike and substance also like coffee, tea, baby milk and such alike.

The insert is featuring all mechanical parts that are required for holding water, liquid, substance in a sealed state, in the right order to be extracted in the machine.

The insert featuring all mechanical parts, required for the infusion, extraction, such as isolation material for separating liquid from substance, is to be opened only in infusion/extraction time (or case).

The inventive machine is able to recognize the product inside of the insert to heat the water or other liquid to the optimal temperature point anywhere from baby milk to a real high temperature beverage, such as coffee of tea. By being programmed by the manufacturer or the user the inventive machine can use the heating source, such as microwave, to be able to heat the liquid/substance from the outside of the disposable container insert inserted into the machine.

The inventive machine furthermore is able to recognize the product inside the insert to build a pressure for infusion or extraction at the correct pressure that is required in the specific substance, whether at a low pressure infusion, like tea or filter coffee, to a high pressure extraction method for Espresso coffee or other substance.

The inventive machine can use a piston type pump for example to press the liquid from the outside of the disposable container insert into the machine.

For achieving good tamping of an ingredient, especially grounded coffee for producing a hot drink, especially espresso, a tamping device is used, which comprises a piston with a tamper whereby the piston is actuated by water, especially by steam. The tamper fulfils the tamping and/or packing of grounded coffee. Therefore, considering that a certain amount of steam pressure is present the force of the tamper on the grounded coffee can directly be controlled by the pressure of the steam. One particular advantage of using steam for actuating the tamper is the fact, that all known espresso machines use steam for brewing the coffee. This steam needs to have a certain pressure e.g. at least 0.9 bar and thus steam of the same source can also be used to actuate the tamper. Additionally, steam can easily be guided using a tube or a house. The constant pressure of the steam needed for brewing the espresso can also provide an almost constant pressure force of a tamper being applied onto the grounded coffee.

The water pressure driven piston can be sourced by the water supply by the city net or by the espresso machine pump. The espresso machine pump can be built as a rotary pump or a vibration pump or as a pump that is actuated by any other methods.

If the tamper is provided with a wave-like structure on the surface for tamping the grounded coffee, the grounded and tamped coffee will also receive a wave-like surface. In comparison to a flat surface the wave-like surface is larger, even though having the same cross-section dimension. This enlarged surface of a tamped coffee can increase the quality of the brewed espresso.

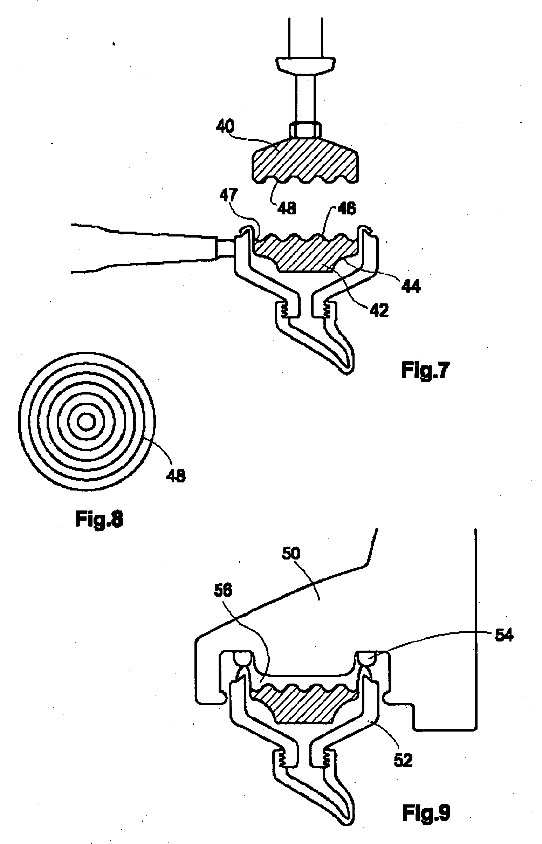

The tamping tip, (the plate that is pressing directly the coffee) is shaped in a wavy profile (Fig. 8), (providing a larger surface on the top side of the packed coffee, creating a round rim of coffee (Fig. 7), sealing the coffee edge with the filter wall, preventing water from passing around the packed coffee among the wall.

A tamping device comprising a steam supply for supplying steam can not only provide steam for actuating the tamper and thus ensuring a good tamping action with nearly constant tamping force, but also provide a steam for other applications as e.g. the brewage of the hot drink. For such a device the level of the pressure for applying to the tamper can be controlled by using a pressure regulator. One possibility is, to provide a steam supply having a higher pressure than needed to actuate the tamper. The pressure regulator will then cut down the high pressure level of the steam supply to the desired level for actuating the tamper. As a result, the steam of the steam supply, having a fairly high pressure level can still be used for other applications, which might need a higher pressure level, than the tamper needs. Also does a variation in the level of the pressure of the pressure supply not influence the pressure of the steam being applied to the tamper. Additionally, the steam pressure needed for the tamper might be adjusted by adjusting the pressure regulator. An adjustment can be fulfilled regardless of the pressure of the steam supply.

The tamping action might be initiated by a switch, especially a micro switch. Such a switch can be operated manually, but it is also possible, to fulfil an automatic or partly automatic actuating of the tamper e.g. mechanically or electronically. One possibility is, to initiate the tamping action when a filter filed with grounded coffee is put in its place in the tamping device by initiating, e.g. pushing, the switch to start the tamping action. This tamping action can thereby be started, by opening a valve, which might be part of the pressure regulator, to supply a steam to the tamper. After tamping, the steam can either be disposed using hoses, or the steam might just as well be discharged into the atmosphere in case such a steam smell is wanted.

In further preferred embodiments a piston type actuator, driven by the steam source that is already available in every traditional espresso machine, is mounted onto the machine. On the bottom tip of the piston a suitable tamper is mounted. Against the piston type tamper is the porta filter "resting bracket", this to make sure the tamping is packing the coffee in the filter properly.

The piston is activated by the steam generated in the machine boiler, while resting the "porta filter" on it's bracket for tamping, the piston will pack and tamp the coffee.

This action can happen by a micro switch that is reading the filter under the tamper, by operating a mechanical or electrical valve manually by the "barista".

Since the pressure in the boiler has some tolerance, a pressure regulator is need to be on the line that is providing the steam to the piston, this feature will obtain operation on fixed pressure regardless to the other steam and energy consumers in the machine.

The steam amount that is discharging from the piston, at the end of the tamping can be discharge to the atmosphere, adding some "Coffee ceremony value" to the coffee bar atmosphere. It can be also discharge directly to the machine connected drain hose, keeping it clean from his tendency to clogged off by coffee powder and milk/coffee fat.

### Further preferred features of the invention are:

A steam driven piston, for tamping the coffee before extracting. Water pressure driven piston, sourced by the water supplied by the city net or by the espresso machine pump rotary/vibration or any other method. Piston type tamper mounted on the machine/grinder/independently or anywhere else, to serve the "barista". "Energy" for operating the piston type tamper can be sourced by machine or as an independent group/source. Operation of the piston type tamper can be done manually, automatically, mechanically or electronically.

For heating and or frothing milk a device according to claim 14 is proposed. Especially for frothing milk, the temperature of the milk is important for achieving to reach a good quality of the milk froth. Therefore, the proposed thermostat can be used to control the temperature of the milk. One possibility is, to connect the thermostat operatively to the valve to control the flow of steam through the valve. E.g. the steam flow and thus the supply of steam to the milk to be heated can electronically be controlled. The control can especially be accomplished, by terminating the flow of steam through the valve, when the desired temperature of the milk is reached. This kind of control is very easy and thus is not expensive to realize.

One possibility to operate the device for heating and/or frothing is to provide an operating switch. By pressing the steam operating switch, the steam will start to work on the milk in the pitcher. When the milk has got to the desired temperature, the thermostat is changing its polarity; this can be used for shutting the steam electric valve, or activating a buzzer, lamp, temperature display or any other indication feature.

Thus, another way to fulfil the controlling of the milk temperature is by operatively connecting the thermostat to a signal device for indicating if the milk has reached the desired temperature. The signal device might be e.g. an optical indicator as a lamp or a buzzer or the like to provide an acoustical signal. A further possibility is, to provide the direct controlling, like terminating the flow of steam through the valve and additionally giving a signal indicating, that the milk has reached the desired temperature.

If the device for heating is formed as a wand, as known by regular machines for preparing a cappuccino, the thermostat can be mounted at this wand closed to an outlet for the steam. In this case, the thermostat is also in the milk, or either the milk is heated by applying steam by this wand. An advantages, that the device for heating milk can be combined to many containers like pitchers containing the milk. Thus, the milk pitcher does not need to be adapted for the device for heating milk.

The thermostat can generally be mounted in any of the parts that have a direct contact with the froth milk. This can be in the pitcher, on the steam wand, on the tube that is collecting the milk from the pitcher to the cappuccinator, or at any other part in any given configuration.

An alternative solution is, to use a device for heating milk according to claim 18. In this example, a milk container especially a pitcher for containing the milk comprises a steam adapter, which is especially mounted in its bottom. Additionally, a steam nozzle for providing steam fits to the steam adapter of the milk pitcher for operatively connecting the milk container to the steam nozzle. One possibility is, to have a steam nozzle which is in a basically vertical position when being in use and the milk pitcher is just positioned over the steam nozzle in a way that the steam nozzle connects to the steam adapter. For heating and/or frothing the milk the steam flows from the steam nozzle through the steam adapter into the milk container. In the milk container one or more steam jets may be operatively connected to the steam adapter, so the steam can further flow from the steam adapter through the steam jets and from there into the milk. The advantages are, that there is no wand, to be operated. The milk pitcher can just be filled with milk, placed on the steam nozzle and after the process of frothing and/or heating the milk, the milk pitcher can just be taken of this steam nozzle and the milk can be poured into a coffee cup or the like, as desired. This operation can be fulfilled with one single hand.

According to one preferred embodiment the device for heating and/or frothing milk is designed as an auto shut off milk steamer as follows. The steam nozzle is positioned at the base of the machine, from bottom pointing to up. This allows placing the milk pitcher on top of it, engaging the steam nozzle from the machine to the steam jet located firmly in the pitcher. Opening the steam, will froth the milk in the pitcher, without any intervention of the operator once milk will reach the selected temperature, steam delivery will shut off automatically. For dispensing the milk, lift the milk pitcher, disconnecting it from the adapter, the steam port nozzle, by the lifting itself. The thermostat probe is located at the base of the steam group of the machine, reading the actual temperature of the milk in the pitcher from the outside, pitcher is made of food graded metal, with good heat transfer characteristic. The shape of the jet block together with the outer shape line of the pitcher, also the angle of the jets hole is creating the circulation movement of the milk inside the pitcher, obtaining the best texture of the frothed milk.

For such a specially adapted milk container the thermostat or a temperature conducting element to be operatively connected to the thermostat is provided in the wall, especially the bottom wall of the milk container. Thereby, the temperature can directly be measured by the thermostat or can be conducted by the conducting element to the thermostat and thereby control the milk temperature, which then can be fulfilled as described above. Mounting this thermostat with temperature conducting element in the bottom of the milk container has the advantage, that the temperature of the milk can be measured, independently of the amount of milk in the milk container, because the thermostat or the temperature conducting element is always in contact with the milk.

There are many possibilities, to construct the thermostat. An easy way is to use a bimetal, which bends, depending on the temperature and can thus actuate a switch or the like. But any other constructions are possible, as for example using a semiconductor connected with a circuit or even a microprocessor. Using a bimetal also offers the opportunity, to directly conduct the movement of this bimetal to actuate the valve, especially open or close the valve.

Further embodiments are: a thermostat that measured the steaming milk temperature, in any kind of steam source, such as espresso machine or independent steam group, in any kind of steam device method such as boiler, thermo block or in line dry steam device. A thermostat, electronic B metal or any other type, controlling the operation of the frothing device, electronically or mechanically, such as traditional steam wand, cappuccinator and such a like. A thermostat is measuring the milk temperature in the pitcher, by being mounted in any of the parts that have a direct contact with the frothed milk, can be in the pitcher, on the steam wand, on the tube that is collecting the milk from the pitcher to the cappuccinator, this or any other part in any given configuration. A thermostat that is controlling the operation of the steam valve, for set point temperature shut off, activating a buzzer, lamp or temperature display, this configurations can be combined or individually appear.

It is advantageously, to combine the machine for producing of drinkable food according to any of the claims 1 to 9 with a tamping device according to any of the claims 10 to 14 and/or a device for heating milk according to any of the claims 15 to 21. Such a machine can also advantageously comprise a steam source to be supplied to the piston of the tamper and/or to the device for heating milk.

The invention is described with reference to the accompanying figures, whereby:
- Figure 1: is a partly sectional side elevation of a coffee machine with a water container and a milk container;
- Figure 2: is a perspective view of another machine for preparing a drink in an open position;
- Figure 3: shows a one time use coup with a container for ingredients on top of the cup in a sectional and perspective view;
- Figure 4: shows a one time use cup according to figure 3 in a sectional view;
- Figure 5: shows a further machine for producing of drinkable food in a schematic and perspective view;
- Figure 6: shows a tamping device in a schematic view;
- Figure 7: a filter with a tamper in a sectional view;
- Figure 8: a bottom view of a tamper tip;
- Figure 9: a further tamping device in a sectional view;
- Figure 10: a device for heating and/or frothing milk in a schematic view; and
- Figure 11: a further device for heating and/or frothing milk in a partially sectional view.

The tamper 10 is located at one end of the piston 12, which is guided in a cylinder 14 to apply pressure on the piston 12 to actuate the piston and thus on the cylinder in a direction downwards. The steam for fulfilling the movement of the piston is provided by a steam boiler 16 which is connected via a pressure regulator 18 and an electro valve 20 to the cylinder 14. The pressure regulator 18 provides a certain pressure of the steam, whereas the electro valve 20 starts and stops the movement of the piston 12. The steam is used to actuate the movement of the piston 12 and is afterwards discharged through the discharge line 22 and the suppressor 24.

Underneath the tamper is located the grounded coffee 26 which is to be tamped. The grounded coffee is provided in a filter 28, which is held in the filter holder 30. Underneath the filter holder 30 is in orifice 32 through which the brewed coffee is to be discharged in a cup. The filter holder 30 further comprises a handle 34, for holding and carrying the filter. During the process of tamping the filter holder rests in the filter holder rest 36. The filter holder rest also includes a micro switch, to initiate the tamping movement. The micro switch gives a signal to the electro valve 20, when a filter holder 30 is placed on the filter holder rest 36.

One advantageous embodiment of the tamper 20 according to figure 7 provides a wave-like structure on the tip of the tamper 40. Tamping the coffee 42, which is packed in the filter 44 will result in the structure of the tamper tip to appear on the surface 46 of the tampered coffee 42. The structure of the surface of the tip 48 of the tamper 40 comprises of substantially concentrically mounted circles as can be seen in figure 8. The wave-like structure also provides a round rim lip 47 of packed coffee.

After tamping the coffee the filter including the coffee is positioned underneath the machine group 50 for brewing the hot drink, especially the espresso. The filter holder 52 is pressed against a sealing 54 to seal the filter holder 52 against the machine group 50. Because of the tamping of the coffee an infusion chamber 56 has an empty space, which is provided before water is entering for brewing the drink, as can be seen in figure 9.

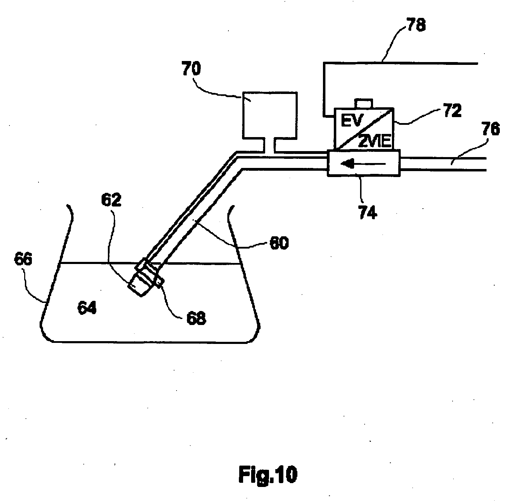

The device for heating and/or frothing milk according to figure 10 comprises of a wand 60 with an orifices 62 which is dipped in milk 64 in the milk container 66. Near the orifice 62 there is located a thermocouple probe 68, which belongs to the thermostat 70 and is connected to the control adapter 72 of the steam valve 74. The steam is provided by a steam supply 76 which delivers the steam to the steam valve 74. The control adapter 72 gets its energy by an electrical supply 78.

When the milk is frothed and/or heated, the steam valve 74 is opened, for example manually opened, to supply steam from the steam supply 76 through the wand 60 and orifices 62 into the milk 64. The thermostat is measuring the milk of the temperature using the thermocouple probe 68 and giving the control adapter 72 a signal to close the steam valve 74, once the temperature of the milk 64 has reached the desired temperature, according to the thermocouple probe.

According an other embodiment a special milk pitcher 80 is provided, which has an adapter 82 in its bottom. The adapter comprises two steam jets 84, which have each an orifice 86 to guide steam in the inside of the milk pitcher. The adapter 82 further comprises a hollow part 88 to which the steam jets 84 are connected. At the bottom of the hollow part 88 is provided a sealing 90 to seal the hollow part 88 of the adapter 82 against a steam nozzle 92, located on a rest platform 94 for resting the pitcher 80. The sealing 90 may be comprises of a viton sealing. The rest platform 94 is part of a machine base, providing the device for heating and/or frothing milk. The steam nozzle 94 is applied by steam via a valve 96. For controlling the temperature of the milk in the milk pitcher 80 a copper quick created temperature thermostat 98, adjusted to 67°C is provided in the bottom of the milk pitcher 80. The thermostat 98 is electrically coupled to the valve 96 to control the flow of steam.

It follows a list of further embodiments of the invention:
**Embodiment**
   1. Machine for producing of drinkable food like coffee, tea, shake, soup or such alike, on basis of an ingredient like e. g. tea leaves, coffee or soup powder etc. and of a drinkable fluid like water, milk or such alike, whereby before production of the food and during the production and after the production neither the fluid nor the food ingredient is ever in direct contact with the machine itself.
**Embodiment**
   2. System for producing a hot drink like coffee, teas, soup or such alike, whereby a machine is provided with a first chamber, able to house a first container containing an food ingredient like coffee powder, tea leaves, soup powder or such alike, whereby the machine contains a second chamber able to house a second container containing a drinkable fluid like water, milk or such alike, whereby fluid from the second container can be pressed with a predefined pressure into the first container, whereby the machine is provided with a heating element to heat the fluid on a predefined temperature and whereby neither the ingredient nor the fluid before and/or during and/or after the production is ever in direct contact with the machine.
**Embodiment**
   3. Machine for producing drink or food according to one of the aforementioned **embodiments 1 or 2,** whereby the machine has an heating element to heat the fluid on a predefined temperature and whereby the heating element itself is never in contact with the fluid.
**Embodiment**
   4. Machine according to one of the aforementioned **embodiments 1-3,** whereby the heating element is provided to heat the fluid on a predefined temperature which is usually below 95°C, preferably in the range between 86°C to 90°C.
**Embodiment**
   5. Machine according to one of the aforementioned **embodiments 1-4,** whereby the machine contains a third chamber, which is preferably circumventing the second chamber and whereby the third chamber contains a third container with a second fluid, for example milk or such alike.
**Embodiment**
   6. Machine according to one of the aforementioned **embodiments 1-5,** whereby a valve of the second chamber and/or the valve of the third chamber are controlled by a controlling device controlling the automatic movement of the valve and whereby means are provided to tune controlling parameters manually, whereby one of the important control parameters is the velocity of the valve pressing the fluid of the second or third chamber into the first chamber.
**Embodiment**
   7. Machine according to one of the aforementioned **embodiments 1-6,** characterized by the fact that the pressure of the valve is all the time greater than six bar, preferably in the range between six and nine bar.
**Embodiment**
   8. Machine according to one of the aforementioned **embodiments 1-7,** characterized by the fact that the second container and /or third container are exchangeable and whereby the second container and/or the third container are opened by pressure of the valve on the container.
**Embodiment**
   9. Machine according to one of the aforementioned **embodiments 1-8,** characterized by the fact that the second container contains water of a specific source, for example from an Italian source if the machine is intended to produce genuine Italian Espresso.
**Embodiment**
   10. Tamping device for tamping an ingredient, especially grounded coffee, for producing a hot drink, especially espresso, comprising:
   a piston with a tamper whereby the piston is actuated by water, especially by steam.
**Embodiment**
   11. Tamping device according to **embodiment** 10 or 11, comprising a steam supply for supplying steam, whereby the steam supply is provided with a pressure regulator.
**Embodiment**
   12. Tamping device according to **embodiment** 10 or 11,
   characterized in that the tamper comprises a surface for tamping the grinded coffee, having a wave-like structure.
**Embodiment**
   13. Tamping device according to any of **embodiment** 10-12, comprising a switch, especially a micro switch, for initiating the tamping action.
**Embodiment**
   14. Device for heating and/or frothing milk, comprising: a steam valve for guiding steam to heat the milk and a thermostat for controlling the temperature of the milk.
**Embodiment**
   15. Device for heating and/or frothing milk according to **embodiment** 14, characterized in that the thermostat is operatively connected to the valve to control the flow of steam through the valve, especially to terminate the flow of steam through the valve, when the desired temperature of the milk is reached.
**Embodiment**
   16. Device for heating and/or frothing milk according to **embodiment** 14 or 15,
   characterized in that the thermostat is operatively connected to a signal device for indicating if the milk has reached the desired temperature.
**Embodiment**
   17. Device for heating and/or frothing milk according to any of **embodiments** 14-16
   characterized in that the device for heating is formed as a wand, with the thermostat mounted at the wand close to an outlet for the steam.
**Embodiment**
   18. Device for heating and/or frothing milk according to any of **embodiments** 14-17, comprising of:
   a milk container, especially a pitcher, for containing milk and a steam nozzle for providing steam,
   characterised in that the milk container comprises a steam adapter, especially in its bottom, for operatively connecting the milk container to the steam nozzle.
**Embodiment**
   19. Device for heating and/or frothing milk according to **embodiment** 18, comprising of at least one steam jet operatively connected to the steam adapter for providing steam, received from the steam nozzle, to the milk.
**Embodiment**
   20. Device for heating and/or frothing milk according to **embodiment** 18 or 19,
   whereby the thermostat or a temperature conducting element to be operatively connected to the thermostat is provided in the wall, especially in the bottom wall of the milk container.
**Embodiment**
   21. Device for heating and/or frothing milk according to any of **embodiments** 14-20
   characterized in that the thermostat comprises a bimetal.
**Embodiment**
   22. Machine for heating and/or frothing milk for producing of drinkable food, especially according to any of the **embodiment** 1-9, with a tamping device according to any of the claims 10-14 and/or a device for heating milk according to any of the claims 15-21.
**Embodiment**
   23. Machine for producing of drinkable food according to **embodiment** 22,
   characterized in that the machine comprises a steam source, whereby the steam source is coupled to the piston to provide the steam for actuating the piston and/or whereby the steam source is coupled to the device for heating.
**Embodiment**
   24. Use of a thermostat in a device according to any of the **embodiments** 14-21.

## Claims

1. Device for heating and/or frothing milk, comprising:
- a steam valve for guiding steam to heat the milk
- a milk container, especially a pitcher, for containing milk and a steam nozzle for providing steam,
**characterized in that** the milk container comprises a steam adapter, especially in its bottom, for operatively connecting the milk container to the steam nozzle.

2. Device for heating and/or frothing milk according to claim 1, further comprising a thermostat for controlling the temperature of the milk.

3. Device for heating and/or frothing milk according to claim 1 or 2
**characterized in that** the thermostat is operatively connected to the valve to control the flow of steam through the valve, especially to terminate the flow of steam through the valve, when the desired temperature of the milk is reached.

4. Device for heating and/or frothing milk according to any of claims 1-3
**characterized in that** the thermostat is operatively connected to a signal device for indicating if the milk has reached the desired temperature.

5. Device for heating and/or frothing milk according to any of claims 1-4, comprising of at least one steam jet operatively connected to the steam adapter for providing steam, received from the steam nozzle, to the milk.

6. Device for heating and/or frothing milk according to any of claims 1-5, whereby the thermostat or a temperature conducting element to be operatively connected to the thermostat is provided in the wall, especially in the bottom wall of the milk container.

7. Device for heating and/or frothing milk according to any of claims 1-6
**characterized in that** the thermostat comprises a bimetal.
